# EUROPÄISCHE PATENTANMELDUNG

(11) **EP 3 789 462 A1**
(43) Veröffentlichungstag der Anmeldung: **10.03.2021**
(21) Anmeldenummer: 19196132.5
(22) Anmeldetag: 09.09.2019
(51) Int. Cl.: C09D 5/02, C09D 5/18, C09D 163/00, C09D 167/08

(54) **WITTERUNGSBESTÄNDIGE BESCHICHTUNG**

(71) Anmelder: Hilti Aktiengesellschaft, 9494 Schaan (LI)
(72) Erfinder: Paetow, Mario, 86899 Landsberg am Lech (DE); Wölfle, Ingrid, 86157 Augsburg (DE)
(74) Vertreter: Hilti Aktiengesellschaft Corporate Intellectual Property

(57) **Zusammenfassung**

Die vorliegende Erfindung betrifft eine wässrige intumeszierende Zusammensetzung mit verbesserter Witterungsbeständigkeit und verbesserten mechanischen Eigenschaften, die ein Bindemittel auf Basis eines Epoxidaminharzes und/oder eines Alkydharzes enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

## Beschreibung

Die vorliegende Erfindung betrifft eine wässrige intumeszierende Zusammensetzung mit einer verbesserten Witterungsbeständigkeit und verbesserten mechanischen Eigenschaften, die ein Bindemittel auf Basis eines Epoxidaminharzes und/oder eines Alkydharzes enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

Intumeszierende Zusammensetzungen, auch dämmschichtbildende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert seine Stabilität und seine Tragfähigkeit. Diese Temperatur kann je nach Brandbelastung, etwa bei direkter Feuereinwirkung (ca. 1000°C) bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z. B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120 Minuten oder bis zu 240 Minuten erreicht wird.

Um entsprechende Feuerwiderstandszeiten im Brandfall auch über einen langen Zeitraum gewährleisten zu können, muss die chemische Zusammensetzung der dämmschichtbildenden Beschichtung auch unter der Einwirkung verschiedener Witterungseinflüsse langfristig erhalten bleiben. Dämmschichtbildende Beschichtungen, die als Treibmittel Melamin enthalten, neigen zur Zersetzung von Melamin, wodurch die Brandschutzeigenschaften der Beschichtung im Laufe der Zeit verloren gehen.

In der EP902062A1 werden intumeszierende Beschichtungen mit einer verbesserten Witterungsbeständigkeit, insbesondere in feuchtwarmen Tropenklima beschrieben, wobei statt Melamin Melaminsalze, Guanidinsalze oder mikroverkapseltes Melamin verwendet werden. In der EP1165706 A1 wird der Einsatz von Melaminpolyphosphat als besonders vorteilhaft herausgestellt.

Die im Stand der Technik beschriebenen dämmschichtbildenden Zusammensetzungen sind im Allgemeinen nicht wasserbeständig und sind daher für den Einsatz im Außenbereich nicht geeignet. Bei mehrfachem Kontakt mit Wasser lösen sich die Intumeszenzadditive aus der dämmschichtbildenden Beschichtung, wodurch die Brandschutzwirkung im Laufe der Zeit verloren geht. Auch der Einsatz von schlecht- oder wasserunlöslichen Intumeszenzadditiven wie beispielsweise gecoatetes Ammoniumpolyphosphat (APP) oder Dipentaerythrit trägt dauerhaft nicht zu einer Verbesserung der Wasserbeständigkeit der dämmschichtbildenden Beschichtung bei.

Es ist bekannt, dass in der Praxis die Witterungsbeständigkeit und insbesondere die Wasserbeständigkeit der dämmschichtbildenden Beschichtung durch Überstreichen mit einem geeigneten Schutzlack erreicht werden kann. Diese Maßnahmen sind jedoch kosten- und zeitintensiv und führen nicht immer zum gewünschten Ergebnis.

Der Erfindung liegt daher die Aufgabe zugrunde, eine intumeszierende Zusammensetzung zum Herstellen einer dämmschichtbildenden Beschichtung bereitzustellen, die nach dem Aushärten eine verbesserte Witterungsbeständigkeit, insbesondere eine verbesserte Wasserbeständigkeit, aufweist, ohne dass ein zusätzlicher Schutzlack aufgetragen werden muss.

Diese Aufgabe wird durch eine wässrige Zusammensetzung nach Anspruch 1 gelöst. Bevorzugte Ausführungsformen sind den Unteransprüchen zu entnehmen.

Gegenstand der Erfindung ist demnach eine wässrige Zusammensetzung zur Herstellung einer intumeszierenden Beschichtung umfassend
a) mindestens ein Bindemittelsystem,
b) dämmschichtbildende Additive zur Bildung einer sich unter Hitzeeinwirkung bildenden aufgeblähten isolierenden Schicht und
c) Wasser,
dadurch gekennzeichnet, dass das Bindemittelsystem a1) mindestens ein Epoxidharz in Kombination mit einem gegenüber Epoxidgruppen reaktiven Amin und/oder a2) mindestens ein Alkydharz umfasst.

Durch die erfindungsgemäße Zusammensetzung können in einfacher und schneller Weise Beschichtungen erhalten werden, die verglichen mit den bisher bekannten Beschichtungen eine verbesserte Witterungsbeständigkeit aufweisen, ohne dass in einem zusätzlichen Arbeitsschritt eine Schutzlack aufgebracht werden muss. Die erfindungsgemäße Zusammensetzung eignet sich somit im besonderen Maße zur Herstellung von wasserbeständigen, dämmschichtbildenden Beschichtungen, die regelmäßig Witterungseinflüssen ausgesetzt sind.

Zum besseren Verständnis der Erfindung werden die folgenden Erläuterungen der hierin verwendeten Terminologie als sinnvoll erachtet. Im Sinne der Erfindung:
- bedeutet "*chemische Intumeszenz*" die Bildung einer voluminösen, isolierenden Ascheschicht durch aufeinander abgestimmte Verbindungen, die bei Hitzeeinwirkung miteinander reagieren;
- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;
- bedeutet "*dämmschichtbildend*", dass im Brandfall ein fester mikroporöser Kohleschaum entsteht, so dass die gebildete feinporige und dicke Schaumschicht, die sogenannte Aschekruste, je nach Zusammensetzung ein Substrat gegen Hitze isoliert;
- ist ein "*Kohlenstofflieferant*" eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als "*Kohlenstoffgerüstbildner*" bezeichnet;
- ist ein "*Säurebildner*" eine Verbindung, die sich unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff "*Dehydrierungskatalysator*" verwendet;
- ist ein "*Treibmittel*" eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das erweichte Bindemittel zu einem Schaum aufbläht (Intumeszenz); dieser Begriff wird gleichbedeutend mit "*Gasbildner*" verwendet;
- ist ein "*Aschekrustenstabilisator*" eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern, wodurch die isolierende Wirkung des Schaums aufrechterhalten oder verstärkt wird.
- *"ein", "eine", "einer"* als Artikel vor einer chemischen Verbindungsklasse, dass eine oder mehrere unter diese chemische Verbindungsklasse fallende Verbindungen gemeint sein können. In einer bevorzugten Ausführungsform ist mit diesem Artikel nur eine einzelne Verbindung gemeint;
- "*mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus";*
- ein durch Zahlen begrenzter Bereich, z.B. *"von 80°C bis 120°C",* dass die beiden Eckwerte und jeder Wert innerhalb dieses Bereichs einzeln offenbart sind.

Bei der erfindungsgemäßen Zusammensetzung handelt es sich um wässrige Zusammensetzung. Dies bedeutet im Sinne der vorliegenden Erfindung, dass die Zusammensetzung einen signifikanten Anteil an Wasser enthält. Vorzugsweise umfasst die Zusammensetzung Wasser in einem Anteil von 5 bis 40 Gew.-%, weiter bevorzugt in einem Anteil von 10 bis 25 Gew.-%.

Die Zusammensetzung zur Herstellung einer intumeszierenden Beschichtung umfasst erfindungsgemäß mindestens ein Bindemittelsystem, welches a1) mindestens ein Epoxidharz in Kombination mit einem gegenüber Epoxidgruppen reaktiven Amin und/oder a2) mindestens ein Alkydharz umfasst.

Das Epoxidharz und das gegenüber Epoxidgruppen reaktive Amin reagiert üblicherweise durch Polyadditionsreaktion. Als Epoxidharz kommt eine Vielzahl der hierfür dem Fachmann bekannten und kommerziell erhältlichen Verbindungen in Betracht, die im Mittel mehr als eine Epoxid-Gruppe, vorzugsweise zwei EpoxidGruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche.

Als Epoxidharz besonders geeignet sind sogenannte Polyepoxid-Flüssigharze, im Folgenden als "Flüssigharz" bezeichnet. Diese weisen eine Glasübergangstemperatur auf, welche üblicherweise unterhalb von 25°C liegt, im Unterschied zu den sogenannten Festharzen, welche eine Glasübergangstemperatur oberhalb von 25°C aufweisen und sich zu bei 25°C schüttfähigen Pulvern zerkleinern lassen. Geeignete Verbindungen sind die Glycidylisierungsprodukte von:
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol)(Bisphenol-P), 1,3-Bis-[2-(4-hydroxyphenyl)-2-propyl]-benzol)(Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxy-naphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M);
- sowie Gemische zweier oder mehrerer derartiger Epoxidharze in beliebigem Verhältnis und in beliebigen Reinheitsgraden.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F verwendet.

Je nach Funktionalität des Epoxidharzes können der Vernetzungsgrad des Bindemittels und somit zum einen die Festigkeit der entstehenden Beschichtung, als auch deren elastische Eigenschaften eingestellt werden. Gleichzeitig hat dieses einen direkten Einfluss auf die erzielbare Expansion der entstehenden Aschekruste im Brandfall.

Erfindungsgemäß umfasst die Zusammensetzung als Härtungsmittel für das Epoxidharz mindestens ein gegenüber Epoxidgruppen reaktives Amin. Zweckmäßig kann dazu jede Aminfunktionalisierte Verbindung verwendet werden, die mit Epoxidgruppen reagieren kann.

Insbesondere haben sich aliphatische oder aromatische Amine, Amidoamine, Polyamide, Polyamin-Epoxidharzaddukte und/oder Ketimine bewährt. Die Aminhärter können einzeln oder als Gemisch zweier oder mehrerer Verbindungen eingesetzt werden. Beispiele sind 1,2-Diaminoethan(ethylendiamin), 1,2-Propandiamin, 1,3-Propandiamin, 1,4-Diaminobutan, 2,2-Dimethyl-1, 3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1, 6-diaminohexan und Gemische davon (TMD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1,7-diamin,1,11-Diamino-3, 6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPDA)), Bis(4-aminocyclohexyl)methan (PACM), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.0^{2,6}]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin. Ebenso können Polyetheramine wie Jeffamine® D-230 (Huntsman), Jeffamine® D-400 (Huntsman), Jeffamine® T-403 (Huntsman) verwendet werden.

Als zusätzliches Härtungsmittel, das auch als Co-Härtungsmittel bezeichnet wird, kann eine Thiol-funktionalisierte Verbindung verwendet werden. Zweckmäßig kann als Thiol-funktionalisierte Verbindung jede Verbindung verwendet werden, welche über mindestens zwei Thiolgruppen verfügt. Als besonders geeignete Thiol-funktionalisierte Verbindungen können beispielhaft erwähnt werden: Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1-Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), Capcure 3-800 (BASF), GPM-800 (Gabriel Performance Products), Capcure LOF (BASF), GPM-800LO (Gabriel Performance Products), KarenzMT PE-1 (Showa Denko), 2-Ethylhexylthioglykolat, *iso*-Octylthioglykolat, Di(*n*-butyl)thiodiglykolat, Glykol-di-3-mercaptopropionat, 1,6-Hexandithiol, Ethylenglykol-bis(2-mercaptoacetat) und Tetra(ethylenglykol)dithiol.

Das gegenüber Epoxidgruppen reaktive Amin ist bevorzugt in einer Menge von 5 bis 30 Gew.-%, bevorzugt in einer Menge von 8 bis 20 Gew.-% in der Zusammensetzung enthalten. Wird eine Mischung aus dem gegenüber Epoxidgruppen reaktiven Amin und der Thiol-funktionalisierten Verbindung verwendet, so beziehen sich die eben genannten Mengen auf die Mischung.

Alternativ oder in Kombination zum Bindemittel auf Epoxidaminharzbasis umfasst die wässrige Zusammensetzung ein Alkydharz. Unter dem Begriff der Alkydharze sind hydrophobe Polymere zu verstehen, die durch Kondensation mehrwertiger Alkohole mit mehrprotonigen Carbonsäuren unter Zusatz von Ölen und/oder Fettsäuren entstehen.

Beispiele geeigneter Dicarbonsäuren umfassen aliphatische Dicarbonsäuren wie Adipinsäure, Azelainsäure, Sebacinsäure, Dodecandisäure, aliphatisch cycloaliphatische wie Dimerfettsäuren, d.h. Umsetzungsprodukten ungesättigter Fettsäuren miteinander, cycloaliphatische Dicarbonsäuren wie 1,4- oder 1,3-Cyclohexandicarbonsäure, Tricyclodecandicarbonsäure und aromatische Dicarbonsäuren wie Isophthalsäure, Terephthalsäure oder Phthalsäure. Es können auch Derivate von Dicarbonsäuren eingesetzt werden. Besonders geeignet sind Anhydride wie beispielsweise Phthalsäureanhydrid, Hexahydrophthalsäureanhydrid oder Tetradehydrophthal- säureanhydrid.

Beispiele geeigneter Dialkohole umfassen aliphatische Alkohole wie zum Beispiel Ethylenglykol, Diethylenglykol, Triethylenglykol, Propylenglykol, 1,3-Butandiol, 1,3-Propandiol, 1,4-Butandiol, Neopentylglykol, 1-Methylpropandiol-1,3,2-Butyl-2-ethyl-propandiol, Pentandiole, Hexandiole, Octandiole, Dodecandiol, Hydroxypivalinsäureneopentylglykolester, cycloaliphatische Alkohole wie 1,4- oder 1,3-Cyclohexandimethanol, 3 (bzw. 4), 8 (bzw. 9)-Bis(hydroxymethyl)-tricyclo[5.2.1.0²⁶]decan Isomerengemische und Bis(4-hydroxycyclohexyl)methan bzw. -propan und Dimerdiole (hydrierte Dimerfettsäuren). Es können in bekannter Art und Weise auch Derivate von Alkoholen eingesetzt werden, wie beispielsweise Ester, insbesondere die entsprechenden Methyl- oder Ethylester.

Bevorzugte mehrwertige Alkohole sind Glycerin, Pentaerythrit, Trimethylolethan, Trimethylolpropan, verschiedene Diole wie Ethan-/Propandiol, Diethylenglykol oder Neopentylglykol.

Bevorzugte mehrwertige Carbonsäuren sind Phthalsäure(anhydrid) (PSA), Isophthalsäure, Terephthalsäure, Trimellitsäureanhydrid, Adipinsäure, Azelainsäure, Sebacinsäure.

Als Ölkomponente bzw. Fettsäure kommen beispielsweise trocknende Öle, wie Leinöl, Oiticicaöl oder Holzöl, halbtrocknende Öle, wie Sojaöl, Sonnenblumenöl, Safloröl, Ricinenöl oder Tallöl, nicht-trocknende Öle, wie Ricinusöl, Kokosöl oder Erdnußöl, oder freie Fettsäuren obiger Öle oder synthetische Monocarbonsäuren in Betracht.

Die Herstellung des Alkydharzes aus den vorstehend genannten Komponenten erfolgt an sich nach den dem Fachmann bekannten Methoden. Es ist aber auch möglich kommerziell erhältliche Alkydharze zur Herstellung der erfindungsgemäßen Zusammensetzung einzusetzen.

Durch Zugabe mindestens eines Reaktivverdünners zum Bindemittelsystem kann die Viskosität der Zusammensetzung entsprechend den Applikationseigenschaften eingestellt bzw. angepasst werden.

In einer Ausführungsform der Erfindung enthält die Zusammensetzung daher weitere epoxidgruppenhaltige Verbindungen als Reaktivverdünner, falls erforderlich. Diese Verbindungen enthalten eine oder mehrere Epoxidgruppen. Grundsätzlich kann jede niedrigviskose Verbindung, die mindestens eine Epoxidgruppe pro Molekül trägt, verwendet werden. Es können zwei oder mehrere unterschiedliche Reaktivverdünner kombiniert werden. Geeignete Beispiele sind Allylglycidylether, Butylglycidylether (BGE), 2-Ethylhexylglycidylether, Alkylglycidylether (C₁₂-C₁₄), Tridecylglycidylether, Phenylglycidylether (PGE), *o*-Kresolglycidylether (CGE), *p*-*tert*-Butylglycidylether, Resorcindiglycidylether (RDGE), 1,4-Butandioldiglycidylether (BDGE), 1,6-Hexandioldiglycidylether (HDGE), Cyclohexandimethanoldiglycidylether, Neopentylglycoldiglycidylether, Trimethylolpropantriglycidylether, Glycerintriglycidylether, Polypropylenglycoldiglycidylether sowie epoxidierte Pflanzenöle wie beispielsweise epoxidiertes Leinöl und epoxidiertes Rizinusöl.

Wenn die Härtung, d.h. die Reaktion des Epoxidharzes mit dem gegenüberüber Epoxidgruppen reaktiven Amins zu langsam erfolgt, kann ein Katalysator für die Härtung verwendet werden. Durch die Verwendung eines Katalysators kann sichergestellt werden, dass die Zusammensetzungen schnell, d.h. innerhalb von wenigen Minuten, und vollständig auch bei Raumtemperatur aushärten. Dies macht solche Zusammensetzungen sehr attraktiv für die Anwendung vor Ort, etwa auf der Baustelle.

Als Katalysatoren können die üblicherweise für Reaktionen zwischen Epoxidharzen und Aminen verwendeten Verbindungen, wie tertiäre Amine, z.B. Benzyldimethylamin, N,N-Dimethylpropylamin, 1,8-Diazabicyclo[5.4.0]undec-7-en und Bis-N,N-Dimethylethanolaminether, Phenol-Derivate, z.B. Nonylphenol, und dergleichen, die dem Fachmann bekannt sind, verwendet werden.

Damit die Zusammensetzung das Bauteil, auch das sie aufgebracht wurde, vor Feuer oder gegen große Hitzeeinwirkung etwa in Folge eines Brandes schützen kann, ist es erforderlich, dass die Zusammensetzung durch den Temperatureintrag eine isolierende Dämmschicht bildet.

Zweckmäßig werden hierzu dämmschichtbildende Additive eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzt, gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator (auch Säurebildner genannt) und ein Treibmittel, die beispielsweise bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des karbonisierten (verkohlten) Materials und gegebenenfalls das erweichte Bindemittel unter Bildung eines voluminösen, isolierenden Schaums bewirkt.

Es sei erwähnt, dass das Bindemittelsystem im Brandfall selbst auch die Funktion eines Kohlenstofflieferanten und/oder Treibmittels haben kann. Die erfindungsgemäße Zusammensetzung umfasst ein Epoxidharz und/oder ein Alkydharz, welches aufgrund seiner funktionellen Gruppen und seines Kohlenstoffgerüstes sowohl die Funktion eines Kohlenstofflieferanten und die eines Treibmittels erfüllen kann. Hierdurch kann ggf. auf zusätzliche Kohlenstofflieferanten und Treibmittel verzichtet werden.

Als Säurebildner bzw. Dehydrierungskatalysatoren kommen die in intumeszierenden Brandschutzformulierungen üblicherweise verwendeten und dem Fachmann bekannten Verbindungen in Betracht, insbesondere ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

In einer Ausführungsform der Erfindung kann die Zusammensetzung als zusätzliches dämmschichtbildendes Additiv einen Kohlenstofflieferanten enthalten.

Als Kohlenstofflieferant kommen die in intumeszierenden Brandschutzformulierungen üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, Polyoxyethylen-/Polyoxypropylen-(EO-PO-)Polyole. Bevorzugt werden Pentaerythrit, Dipentaerythrit oder Polyvinylacetat eingesetzt.

In einer weiteren Ausführungsform der Erfindung kann die Zusammensetzung als zusätzliches dämmschichtbildendes Additiv ein Treibmittel enthalten.

Als Treibmittel kommen die üblicherweise in Brandschutzformulierungen verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt.

In einer weiteren Ausführungsform der Erfindung kann die Zusammensetzung ferner eine thermisch expandierbare Verbindung, wie eine Graphit-Interkallationsverbindung, die auch als Blähgraphit bekannt sind, enthalten. Diese können ebenfalls ins Bindemittel eingebunden werden.

Als Blähgraphit kommen beispielsweise bekannte Einlagerungsverbindungen von SOₓ, NOₓ, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern.

Daneben können Aschekrustenstabilisatoren wie Melaminphosphat oder Melaminborat enthalten sein.

Die dämmschichtbildenden Additive können in einer Menge von 40 bis 65 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil in der Zusammensetzung so hoch wie möglich eingestellt. Bevorzugt beträgt der Anteil in der Zusammensetzung 45 bis 55 Gew.-%.

Die Zusammensetzung kann neben den dämmschichtbildenden Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der *p*-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. XanthanGummi.

Die erfindungsgemäße Zusammensetzung kann als Zwei- oder Mehrkomponenten-System konfektioniert werden.

Die Zusammensetzung kann als Paste mit einem Pinsel, einer Rolle oder durch Sprühen auf das Substrat, insbesondere auf das metallische Substrat, aufgebracht werden.

Die erfindungsgemäße Zusammensetzung ist besonders als Beschichtung, insbesondere als Brandschutzbeschichtung, bevorzugt sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Zusammensetzung als Beschichtung, insbesondere als Beschichtung von metallischen und/oder nicht metallischen Substraten, ganz besonders für Konstruktionselemente oder Bauelemente aus Stahl, Beton, Holz und anderen Materialien, wie etwa Kunststoffen. Insbesondere wird die erfindungsgemäße Zusammensetzung als Brandschutzbeschichtung verwendet.

Die aus der erfindungsgemäßen Zusammensetzung hergestellten Beschichtungen zeichnen sich verglichen mit bekannten Systemen durch eine verbesserte Witterungsbeständigkeit, insbesondere durch eine verbesserte Wasserbeständigkeit aus. Daher ist ein weiterer Gegenstand der Erfindung die Verwendung eines Bindemittelsystems umfassend a1) mindestens ein Epoxidharz in Kombination mit einem gegenüber Epoxidgruppen reaktiven Amin und/oder a2) mindestens ein Alkydharz in wässrigen Zusammensetzungen zur Verbesserung der Witterungsbeständigkeit, insbesondere der Wasserbeständigkeit, einer aus einer wässrigen Zusammensetzung hergestellten Beschichtung.

Die folgenden Beispiele dienen der weiteren Erläuterung der Erfindung.

### AUSFÜHRUNGSBEISPIELE

Anhand der Ausführungsbeispiele wird gezeigt, dass durch die Verwendung von Epoxidaminharzen und/oder Alkydharzen in der erfindungsgemäßen Zusammensetzung die Witterungsbeständigkeit, insbesondere die Wasserbeständigkeit, verbessert werden kann.

Es wurden die aus Tabelle 1 ersichtlichen erfindungsgemäßen Zusammensetzungen hergestellt. Dazu wurden die in Tabelle 1 aufgelisteten Komponenten miteinander vermischt. Als Vergleichszusammensetzungen wurden zwei kommerziell erhältliche Zusammensetzungen V1 und V2 verwendet, die kein Epoxidaminharz oder Alkydharz enthalten.

**Tabelle 1: Komponenten der erfindungsgemäßen Zusammensetzung in Gew.-%**

| | | **1** (Epoxidaminharz) | **2** (Epoxidaminharz) | **3** (Alkydharz) |
|---|---|---|---|---|
| | Wasser | 17,3 | 20,6 | 13,1 |
| Netz-/Dispergieradditiv bzw. Rheologieadditiv | Additol VXW 6208/60¹ | 0,5 | 0,5 | - |
| | Disperbyk 190² | - | - | 1,0 |
| | Acrysol RM 825³ | - | - | 0,3 |
| Brandschutzadditive | TiO₂ | 10,0 | 10,0 | 10,0 |
| | Exolit AP422⁴ | 21,0 | 21,0 | 21,0 |
| | Pentaerythrit | 12,0 | 12,0 | 12,0 |
| | Melamin | 12,0 | 12,0 | 12,0 |
| Epoxid-Amin-System | Beck EP 147w⁵ | 16,0 | - | - |
| | Beck EH 623 w/80WA⁶ | 10,7 | - | - |
| | Beck EP 140⁷ | - | 8,8 | - |
| | Beck EH 613 w/80WA⁸ | - | 6,9 | - |
| | Polysulfid | - | 7,7 | - |
| Polyurethan-modifizierte Alkydemulsion | Uradil AZ601-44⁹ | - | - | 29,0 |
| Antischaummittel | Additiol VXW 6393¹⁰ | 0,5 | 0,5 | - |
| | Byk 024¹¹ | - | - | 0,1 |
| Katalysator | Durham VX 71¹² | - | - | 1,5 |

| | | | | |
|---|---|---|---|---|
| ¹ polymeres nicht-ionische Netz- und Dispergieradditiv der Fa. Allnex ² lösemittelfreies Netz- und Dispergieradditiv für wässrige System der Fa. BYK ³ nicht-ionischer Urethan Modifikator der Fa. Dow ⁴ Ammoniumpolyphosphat der Fa. Clariant ⁵ flüssiges Bisphenol A/F basiertes Epoxidharz der Fa. Allnex ⁶ wässriges aliphatisches Polyaminadduct der Fa. Allnex ⁷ flüssiges Bisphenol-A basiertes Epoxidharz der Fa. Allnex ⁸ wässriges aliphatisches Polyaminadduct der Fa. Allnex ⁹ Polyurethan-modifizierte Alkydharz Dispersion der Fa. DSM ¹⁰ Antischaummittel der Fa. Allnex ¹¹ Silikonhaitiger Entschäumer der Fa. Byk | | | | |

Die erfindungsgemäßen Zusammensetzungen 1 bis 3 und die kommerziell erhältlichen Zusammensetzung V1 und V2 wurden einem Bewitterungstest unterzogen, welcher analog dem Salzsprühtest nach DIN 50021/ASTMB117-60 durchgeführt wurde. Dazu wurden rechteckige Metallplatten (2x3 cm) mit den erfindungsgemäßen und den kommerziell erhältlichen Zusammensetzungen beschichtet und anschließend getrocknet. Die Dicke der Beschichtung auf den Metallplatten wurde an 5 Punkten mittels eines Schichtdickenmessgerätes gemessen. Die anfänglichen Schichtdicken sollten ca. 100 mm nach Trocknung betragen. Die so hergestellten Proben wurden in einer Plastikpetrisschale bei 35 °C in 10 mL Wasser für eine definierte Anzahl von Stunden eingelagert (6, 8 10, 20, 30, 40, 50, 60 und 70 Stunden). Im Anschluss an die jeweils definierte Anzahl von Stunden wurden die Proben aus dem Wasser genommen und das Wasser wurde abgeschüttelt. Die Proben wurden mindestens 24 Stunden bei 35 °C getrocknet. Es wurde wiederum eine Schichtdickenmessung an 5 Punkten der Probe durchgeführt.

Bei beiden kommerziell erhältlichen Zusammensetzungen V1 und V2 sank die Schichtdicke bereits nach 6 Stunden auf 80 % der ursprünglichen Schichtdicke und blieb danach konstant. Die Beschichtung zeigten eine starke Rissbildung.

Im Gegensatz dazu blieben die Schichtdicken der erfindungsgemäßen Zusammensetzungen 1 bis 3 konstant und das Aussehen der Beschichtung zeigte keine Veränderungen.

Die Brandschutzwirkung der aus den kommerziell erhältlichen Zusammensetzungen V1 und V2 sowie aus den erfindungsgemäßen Zusammensetzungen 1 bis 3 hergestellten Beschichtungen wurde durch Messung des Expansionsfaktors bestimmt. Hierzu wurden kreisförmige Proben mit einem Durchmesser von 5 cm und ca. 1000 mm Schichtdicke (jeweils 5 Proben pro Zusammensetzung) präpariert. Es wurde die genaue Schichtdicke bestimmt. Nach Tempern in einem Muffelofen (15 Minuten bei 600 °C und 30 Minuten bei 800 °C) wurde die Aufschäumhöhe bestimmt und der Expansionsfaktor berechnet. Die Ergebnisse sind in der nachstehenden Tabelle 2 aufgeführt.

**Tabelle 2: Ergebnisse der Messung der Expansionsfaktoren**

| Beschichtung hergestellt aus Zusammensetzung | Expansionsfaktor |
|---|---|
| **V1** | 20 |
| **V2** | 10 |
| **1** | 44 |
| **2** | 35 |
| **3** | 25 |

## Patentansprüche

1. Wässrige Zusammensetzung zur Herstellung einer intumeszierenden Beschichtung umfassend
a) mindestens ein Bindemittelsystem,
b) dämmschichtbildende Additive zur Bildung einer sich unter Hitzeeinwirkung bildenden aufgeblähten isolierenden Schicht und
c) Wasser
**dadurch gekennzeichnet, dass** das Bindemittelsystem a1) mindestens ein Epoxidharz in Kombination mit einem gegenüber Epoxidgruppen reaktiven Amin und/oder a2) mindestens ein Alkydharz umfasst.

2. Wässrige Zusammensetzung nach Anspruch 1, **dadurch gekennzeichnet, dass** das Epoxidharz mindestens ein Polyepoxidharz-Flüssigharz umfasst.

3. Wässrige Zusammensetzung nach Anspruch 1 oder 2, **dadurch gekennzeichnet, dass** das Epoxidharz mindestens einen Diglycidylether von Bisphenol A und/oder Bisphenol F umfasst.

4. Wässrige Zusammensetzung nach einem der vorhergehenden Ansprüche, **dadurch gekennzeichnet, dass** das gegenüber Epoxidgruppen reaktive Amin ausgewählt ist aus der aus primären aliphatischen Aminen, sekundären aliphatischen Aminen und Polyaminen bestehenden Gruppe ausgewählt ist.

5. Wässrige Zusammensetzung nach einem der Ansprüche 2 bis 4, wobei die Zusammensetzung ferner mindestens eine thiolfunktionalisierte Verbindung als Co-Härtungsmittel enthält.

6. Wässrige Zusammensetzung nach einem der vorhergehenden Ansprüche, **dadurch gekennzeichnet, dass** die Zusammensetzung 5 bis 40 Gew.-% Wasser bezogen auf das Gesamtgewicht der wässrigen Zusammensetzung enthält.

7. Wässrige Zusammensetzung nach einem der vorhergehenden Ansprüche, **dadurch gekennzeichnet, dass** die dämmschichtbildenden Additive ein Gemisch aus mindestens einem Säurebildner, mindestens einem Treibmittel und gegebenenfalls mindestens einem Kohlenstofflieferant umfassen.

8. Wässrige Zusammensetzung nach einem der Ansprüche 1 bis 6, **dadurch gekennzeichnet, dass** die dämmschichtbildenden Additive mindestens eine thermisch expandierbare Verbindung umfassen.

9. Wässrige Zusammensetzung nach Anspruch 7 oder 8, **dadurch gekennzeichnet, dass** die dämmschichtbildenden Additive ferner mindestens einen Aschekrustenstabilisator enthalten.

10. Wässrige Zusammensetzung nach einem der vorhergehenden Ansprüche, **dadurch gekennzeichnet, dass** die wässrige Zusammensetzung als Zwei- oder Mehrkomponenten-System konfektioniert ist.

11. Verwendung der wässrigen Zusammensetzung nach einem der vorhergehenden Ansprüche zur Herstellung von Beschichtungen mit verbesserter Witterungsbeständigkeit.

12. Verwendung nach Anspruch 11 zur Herstellung einer Beschichtung auf Stahlkonstruktionselementen.

13. Verwendung eines Bindemittelsystems umfassend a1) mindestens ein Epoxidharz in Kombination mit einem gegenüber Epoxidgruppen reaktiven Amin und/oder a2) mindestens ein Alkydharz in wässrigen Zusammensetzungen zur Verbesserung der Witterungsbeständigkeit einer aus einer wässrigen Zusammensetzung hergestellten Beschichtung.

14. Verwendung gemäß Anspruch 13 zur Erhöhung der Wasserbeständigkeit der aus der wässrigen Zusammensetzung hergestellten Beschichtung.
